# EUROPEAN PATENT SPECIFICATION

(11) **EP 2 891 705 B1**
(45) Date of publication and mention of the grant of the patent: **14.08.2019**
(21) Application number: 13832397.7
(22) Date of filing: 27.08.2013
(51) Int. Cl.: C10M 169/06, F16D 3/205, C10M 115/08, C10M 129/74, C10M 135/20, C10M 137/10, C10M 139/00, C10N 10/04, C10N 10/12, C10N 30/00, C10N 30/10, C10N 30/12, C10N 40/04, C10N 50/10

(54) **GREASE COMPOSITION FOR CONSTANT VELOCITY JOINTS, AND CONSTANT VELOCITY JOINT IN WHICH GREASE COMPOSITION FOR CONSTANT VELOCITY JOINTS IS SEALED**
SCHMIERFETTZUSAMMENSETZUNG FÜR HOMOKINETISCHE GELENKE UND HOMOKINETISCHES GELENK MIT VERSIEGELTER SCHMIERFETTZUSAMMENSETZUNG FÜR HOMOKINETISCHE GELENKE
COMPOSITION DE GRAISSE POUR JOINTS HOMOCINÉTIQUES, ET JOINT HOMOCINÉTIQUE RENFERMANT UNE COMPOSITION DE GRAISSE POUR JOINTS HOMOCINÉTIQUES

(30) Priority: 28.08.2012 JP 2012187640
(43) Date of publication of application: 08.07.2015
(73) Proprietor: NTN Corporation, Osaka-shi, Osaka 550-0003 (JP); JX Nippon Oil & Energy Corporation, Chiyoda-ku Tokyo 100-8162 (JP)
(72) Inventor: TAKABE Shinichi, Iwata-shi Shizuoka 438-8510 (JP); ARAI Takashi, Tokyo 100-8162 (JP); SAKAMOTO Kiyomi, Tokyo 100-8162 (JP); KUROSAWA Osamu, Tokyo 100-8162 (JP)
(74) Representative: Grünecker Patent- und Rechtsanwälte PartG mbB
(86) International application number: PCT/JP2013/072830
(87) International publication number: WO 2014/034647

(56) References cited:
- EP-A2- 1 046 700
- JP-A- 2002 080 878
- JP-A- 2006 335 876
- JP-A- 2007 056 139
- JP-A- 2009 114 354
- JP-A- 2010 065 194
- JP-A- 2011 236 354
- US-A1- 2010 016 194

## Description

### Technical Field

The present invention relates to a grease composition for constant velocity joints and a constant velocity joint in which the same is sealed. Particularly, the present invention relates to a grease composition suitable for constant velocity joints applied to drive shafts for automobiles and a constant velocity joint in which the same is sealed.

### Background Art

A constant velocity joint refers to a universal joint to transmit torque in which two intersecting axes are rotated at a constant angular velocity at any intersecting angle between those two axes, and is widely used in automobiles, industrial machinery or the like. In automobile application, the constant velocity joint is used for a drive shaft transmitting power from a differential gear to driving wheels of an automobile or a propeller shaft transmitting power to a differential gear in a rear-wheel-drive vehicle and a four-wheel-drive vehicle.

In the constant velocity joint, a grease is sealed as lubricant. A grease in which an additive such as molybdenum disulfide is blended in base grease composed of a lubricating base oil and a lithium soap or a urea-based thickener is used for the constant velocity joint (see, for example, Patent Literature 1).

In addition, a boot is mounted to the constant velocity joint in order to prevent the grease sealed inside thereof from leaking to the outside. Such a boot is composed of a rubber material such as chloroprene rubber, silicone rubber, or chlorinated polyethylene rubber or a resin material such as a thermoplastic elastomer, and it is desired that the grease affects the boot material to a small extent, that is, the physical property change of the boot material is small in contact with the grease.
EP1046700A2, JP2010065194, US2010/0016194A1, JP2011236354A and JP2006335876A also disclose grease compositions.

### Citation List

### Patent Literature

Patent Literature 1: Japanese Patent Application Laid-open No. 2007-056139

### Summary of Invention

### Technical Problem

Improving performance of the constant velocity joint, e.g., reducing vibration and prolonging a life time, is expected from the grease for constant velocity joints, and the grease cost is also emphasized. However, the structure of the constant velocity joint includes a Birfield-type fixed constant velocity joint and a double offset-type sliding constant velocity joint in which balls are used as the rolling elements, and a tripod-type sliding constant velocity joint in which rollers are used as the rolling elements, a lubrication state is different from one structure to another, and thus a grease composition exerting optimal performance has been selected for each structure.

Although reduction in amount of an additive such as molybdenum disulfide or an organomolybdenum which is relatively expensive is also one of the means to save the grease cost, in this case, the prolongation of a life time and the reduction of vibration in the constant velocity joint have been limited to a certain extent, and at the same time, it has been difficult to minimize the influence of the grease on the boot material.

The problems to be solved by the present invention are to provide a grease composition for constant velocity joints capable of exerting sufficient characteristics even in the case of reducing the additive such as molybdenum disulfide and a constant velocity joint in which the grease composition is sealed.

### Solution to Problem

The present invention provides grease compositions described in claims 1 and 2, the use of a grease composition described in claim 3, and constant velocity joints described in claims 4 to 6 in order to solve the problems described above.

### Advantageous Effects of Invention

The grease composition according to the present invention can attain improvement of the performance of the constant velocity joint such as reduction of vibration and prolongation of a life time, and minimize the influence on the boot material. In addition, since the grease composition can suppress an addition of the organomolybdenum without use of molybdenum disulfide, the grease cost can be saved. Further, the grease composition exerts sufficient characteristics in the constant velocity joints of different structures such as a fixed constant velocity joint in which the rolling elements are balls and a sliding constant velocity joint in which the rolling elements are balls or rollers.

### Brief Description of Drawings

Figure 1 is a schematic cross section of an example of a fixed constant velocity joint.
Figure 2 is a schematic cross section of another example of a fixed constant velocity joint.
Figure 3 is a schematic cross section of an example of a sliding constant velocity joint.
Figure 4 is a schematic cross section of another example of a sliding constant velocity joint.
Figure 5 is a schematic cross section of another example of a sliding constant velocity joint.
Figure 6 is a schematic cross section of an example of a drive shaft for an automobile.

### Description of Embodiments

[First embodiment: grease composition for constant velocity joint]

The grease composition for constant velocity joints according to the first embodiment of the present invention comprises (a) a lubricating base oil, (b) at least one thickener selected from urea-based thickeners, urethane-based thickeners and urea/urethane-based thickeners, (c) an organomolybdenum of which molybdenum element content is 1000-4000 ppm by mass based on the total amount of the grease composition, (d) a zinc dithiophosphate, (e) a polysulfide, and (f) a triglyceride. The total content of the (c) organomolybdenum, the (d) zinc dithiophosphate and the (e) polysulfide is 1-4% by mass, and preferably 2-3% by mass based on the total amount of the grease composition.

Mineral oil and/or synthetic oil can be used as the (a) lubricating base oil.

The mineral oil used can be one obtained by the method commonly practiced in the lubricating oil producing process in the petroleum refining industry. The mineral oil can include, for example, paraffinic, naphthenic mineral oil or the like obtained by treating a lubricating oil fraction, which has been obtained by atmospheric-distilling and vacuum-distilling crude oil, with any one or a suitable combination of two or more of refining means of solvent deasphalting, solvent extraction, hydrocracking, solvent dewaxing, catalytic dewaxing, hydrotreating, sulfuric acid washing, clay treatment and the like.

The synthetic oil includes, for example, polyolefin oil, alkylbenzene oil, alkylnaphthalene oil, biphenyl oil, diphenylalkane oil, di(alkylphenyl)alkane oil, ester oil, polyglycol oil, polyphenylether oil, fluorine compounds such as perfluoropolyethers and fluorinated polyolefins, and silicone oil.

Preferably, the lubricating base oil is a base oil from a hydrocarbon compound represented by mineral oil and polyolefin oil, particularly a paraffinic hydrocarbon compound and/or a base oil obtained by mixing a paraffinic hydrocarbon compound and a naphthenic hydrocarbon compound.

Preferably, the kinematic viscosity at 100°C of the lubricating base oil is 1-200 mm²/s, and more preferably 5-50 mm²/s. Preferably, the content of the lubricating base oil is 60% or more by mass, and more preferably 70% or more by mass based on the total amount of the grease composition. When the kinematic viscosity or the content of the lubricating base oil is out of the above range, the grease composition having a desired consistency is difficult to prepare simply.

The (b) thickener used is at least one thickener selected from urea-based thickeners, urethane-based thickeners and urea/urethane-based thickeners. The sufficient heat resistance can be obtained by using these thickeners.

The urea-based thickeners include, for example, urea compounds such as diurea compounds, triurea compounds, tetraurea compounds, and polyurea compounds (except for diurea compounds, triurea compounds, and tetraurea compounds); urea/urethane compounds; urethane compounds such as diurethane or mixtures thereof, and among these, preferred compounds are diurea compounds, urea/urethane compounds, diurethane compounds and mixtures thereof.

Preferable examples of the urea-based thickeners include the diurea compounds represented by the following formula (1):

A-NH-(C=O)-NH-R¹-NH-(C=O)-NH-B (1).

In the formula (1), R¹ represents a divalent organic group, and preferably a divalent hydrocarbon group. Such a divalent hydrocarbon group specifically includes linear or branched alkylene groups, linear or branched alkenylene groups, cycloalkylene groups, arylene groups, alkylarylene groups, arylalkylene groups and the like. Both A and B represent a monovalent organic group, preferably a monovalent hydrocarbon group. Such a monovalent hydrocarbon group specifically includes linear or branched alkyl groups, linear or branched alkenyl groups, cycloalkyl groups, aryl groups, alkylaryl groups, arylalkyl groups and the like.

Preferable examples of the urea/urethane-based thickeners include the urea/urethane compounds represented by the formula (2):

A-NH-(C=O)-NH-R¹-NH-(C=O)-O-B (2).

In the formula (2), R¹ represents a divalent organic group, and preferably a divalent hydrocarbon group. Such a divalent hydrocarbon group specifically includes linear or branched alkylene groups, linear or branched alkenylene groups, cycloalkylene groups, arylene groups, alkylarylene groups, arylalkylene groups and the like. Both A and B represent a monovalent organic group, preferably a monovalent hydrocarbon group. Such a monovalent hydrocarbon group specifically includes linear or branched alkyl groups, linear or branched alkenyl groups, cycloalkyl groups, aryl groups, alkylaryl groups, arylalkyl groups and the like.

Preferably, the content of the thickener is 2-20% by mass, and particularly preferably 5-15% by mass based on the grease composition.

A molybdenum dithiocarbamate and/or a molybdenum dithiophosphate can be used as the (c) organomolybdenum.

As the molybdenum dithiocarbamate, those commercially available as lubricant additives can be used, and it is possible to use the compound represented by the following formula (3): 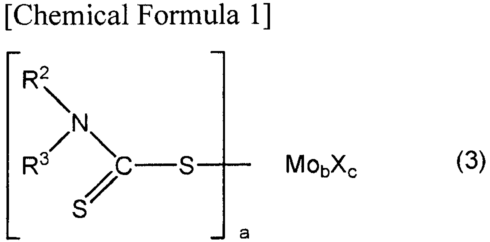 where, R² and R³ may be the same or different from each other and each represent a hydrocarbon group having one or more carbon atoms, Xs may be the same or different from each other and each represent an oxygen atom or a sulfur atom, and a, b and c each independently represent an integer of 1-6. The hydrocarbon groups represented by R² and R³ in the formula (3) include, for example, alkyl groups having 1-24 carbon atoms, cycloalkyl groups having 5-7 carbon atoms, alkylcycloalkyl groups having 6-11 carbon atoms, aryl groups having 6-18 carbon atoms, alkylaryl groups having 7-24 carbon atoms and arylalkyl groups having 7-12 carbon atoms.

Preferably, the content of molybdenum element in the molybdenum dithiocarbamate is 10-40% by mass, and particularly preferably 20-35% by mass based on the molybdenum dithiocarbamate. Preferably, the content of sulfur element in the molybdenum dithiocarbamate is 10-40% by mass, and particularly preferably 20-35% by mass based on the molybdenum dithiocarbamate.

As the molybdenum dithiophosphate, those commercially available as lubricant additives can be used. Preferable examples of the molybdenum dithiophosphate can include the compound represented by the following formula (4): 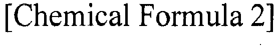 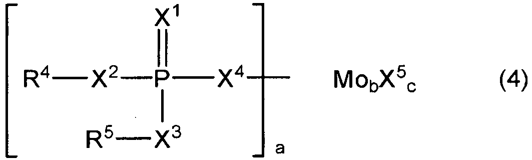 where, R⁴ and R⁵ may be the same or different from each other and each represent a hydrocarbon group having one or more carbon atoms, X¹, X², X³, X⁴ and X⁵ may be the same or different from each other and each represent an oxygen atom or a sulfur atom, and a, b and c each independently represent an integer of 1-6. The hydrocarbon groups represented by R⁴ and R⁵ in the formula (4) include, for example, alkyl groups having 1-24 carbon atoms, cycloalkyl groups having 5-7 carbon atoms, alkylcycloalkyl groups having 6-11 carbon atoms, aryl groups having 6-18 carbon atoms, alkylaryl groups having 7-24 carbon atoms and arylalkyl groups having 7-12 carbon atoms.

Preferably, the content of molybdenum element in the molybdenum dithiophosphate is 2-20% by mass, and particularly preferably 5-15% by mass based on the molybdenum dithiophosphate. Preferably, the content of phosphorus element in the molybdenum dithiophosphate is 1-20% by mass, and particularly preferably 3-10% by mass based on the molybdenum dithiophosphate. Preferably, the content of sulfur element in the molybdenum dithiophosphate is 5-25% by mass, and particularly preferably 10-20% by mass based on the molybdenum dithiophosphate.

The content of the organomolybdenum is 1000-4000 ppm by mass, and preferably 1000-3000 ppm by mass in terms of molybdenum element based on the total amount of the grease composition.

As the (d) zinc dithiophosphate, those commercially available as lubricant additives can be used, and it is possible to use the compound represented by the following formula (5): 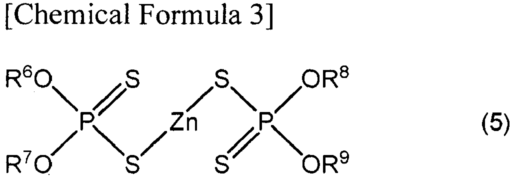 where, R⁶ to R⁹ may be the same or different from each other and each represent a hydrocarbon group. The hydrocarbon groups represented by R⁶ to R⁹ in the formula (5) include, for example, alkyl groups having 1-24 carbon atoms, cycloalkyl groups having 5-7 carbon atoms, alkylcycloalkyl groups having 6-11 carbon atoms, aryl groups having 6-18 carbon atoms, alkaryl groups having 7-24 carbon atoms and aralkyl groups having 7-12 carbon atoms, and are preferably alkyl groups having 2-10 carbon atoms, and particularly preferably secondary branched alkyl groups.

Preferably, the content of zinc element in the zinc dithiophosphate is 2-20% by mass, and particularly preferably 5-15% by mass based on the zinc dithiophosphate. Preferably, the content of phosphorus element in the zinc dithiophosphate is 2-25% by mass, and particularly preferably 4-15% by mass based on the zinc dithiophosphate. Preferably, the content of sulfur element in the zinc dithiophosphate is 10-30% by mass, and particularly preferably 15-25% by mass based on the zinc dithiophosphate.

The content of the zinc dithiophosphate is 0.2-2% by mass, and preferably 0.3-1% by mass based on the total amount of the grease composition.

As the (e) polysulfide, those commercially available as lubricant additives can be used, and it is possible to use the compound represented by the following formula (6):

R¹⁰-Sₓ-R¹¹ (6)

where, R¹⁰ and R¹¹ may be the same or different from each other and each represent a linear or branched alkyl group having 3-20 carbon atoms, an aryl group having 6-20 carbon atoms, an alkaryl group having 6-20 carbon atoms or an aralkyl group having 6-20 carbon atoms, and x represents an integer of 2-6, and preferably an integer of 2-5.

The content of sulfur element in the polysulfide is 20-55% by mass, and preferably 35-50% by mass based on the polysulfide. The content of the polysulfide is 0.1-2% by mass, and preferably 0.2-1% by mass based on the total amount of the grease composition.

The (f) triglyceride is a triester of glycerol and a monovalent carboxylic acid, and is preferably one in which the monovalent carboxylic acid is a fatty acid having 8-24 carbon atoms, particularly 10-20 carbon atoms. As such a triglyceride, those commercially available as fat and oil can be used, and it is possible to use, for example, beef tallow, lard, sunflower oil, soybean oil, rapeseed oil, rice bran oil, coconut oil, palm oil or palm kernel oil.

The content of the (f) triglyceride is 0.2-10% by mass, and preferably 0.5-5% by mass based on the total amount of the grease composition.

The grease composition according to the first embodiment can contain additives commonly used in lubricating oil or grease other than the (a)-(f) components as necessary. Such additives include, for example, detergents, dispersants, anti-wear agents, viscosity index improvers, antioxidants, extreme pressure agents, antirust agents and corrosion inhibitors.

The grease composition according to the above first embodiment is used by being sealed in a constant velocity joint. For the constant velocity joint, it is possible to use a structure of a fixed constant velocity joint or a sliding constant velocity joint. The fixed constant velocity joint includes one in which the rolling elements are balls, and the sliding constant velocity joint includes one in which the rolling elements are balls or rollers. Such constant velocity joints can be applied to a drive shaft for an automobile.

### [Second embodiment: fixed constant velocity joint]

The constant velocity joint according to the second embodiment of the present invention is a fixed constant velocity joint in which the grease composition for constant velocity joints according to the above first embodiment is sealed and the rolling elements are balls.

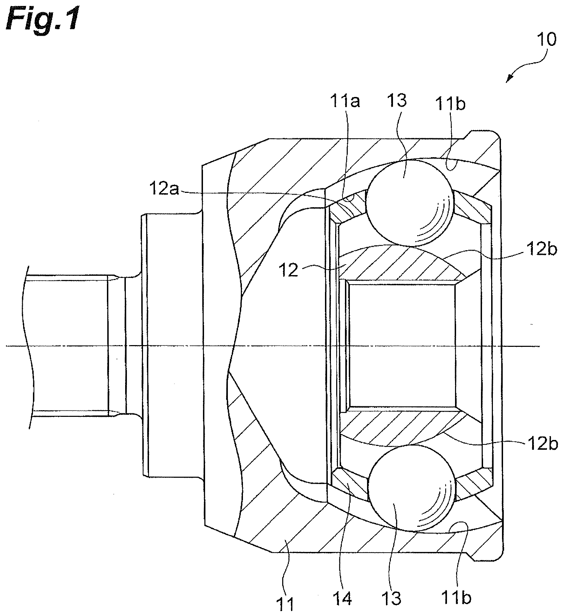

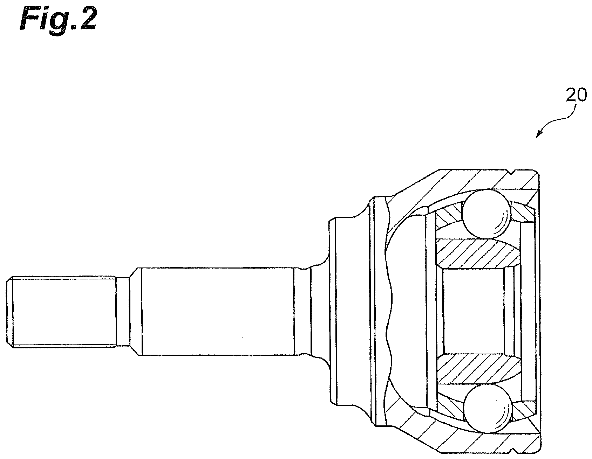

An example of the fixed constant velocity joint in which the rolling elements are balls is one referred to as a Birfield-type fixed constant velocity joint 10 as shown in Figure 1, of which structure comprises an outer joint member 11 with a plurality of grooves 11b formed on spherical inner peripheral face 11a thereof, an inner joint member 12 with a plurality of grooves 12b making pairs with the grooves 11b on the outer joint member 11 formed on spherical outer peripheral face 12a thereof, and balls 13, as the rolling elements, interposed between the grooves 11b on the outer joint member 11 and the grooves 12b on the inner joint member 12, and interposes a cage 14 to hold the balls 13 between the outer joint member 11 and the inner joint member 12. It is noted that the number of the balls 13 is preferably any of 3, 4, 5, 6, 7, and 8. In addition, the Birfield-type fixed constant velocity joint also includes an undercut-free type fixed constant velocity joint 20 as shown in Figure 2 as a kind thereof. Furthermore, a boot is mounted to the constant velocity joint (not shown in the figure) in order to prevent the grease sealed inside thereof from leaking to the outside and to prevent foreign matters from entering inside.

### [Third embodiment: sliding constant velocity joint]

The constant velocity joint according to the third embodiment of the present invention is a sliding constant velocity joint in which the grease composition for constant velocity joints according to the above first embodiment is sealed and the rolling elements are balls.

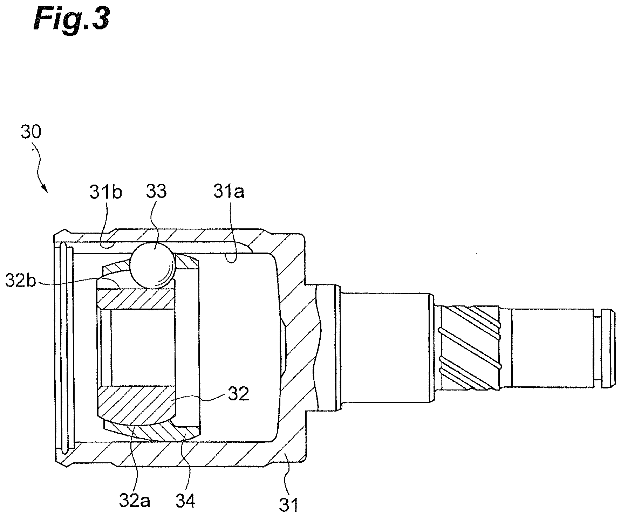

An example of the sliding constant velocity joint in which the rolling elements are balls is one referred to as a double offset-type sliding constant velocity joint 30 as shown in Figure 3, of which structure comprises an outer joint member 31 with a plurality of linear grooves 31b extended in the axis direction formed on cylindrical inner peripheral face 31a thereof, an inner joint member 32 with a plurality of linear grooves 32b making pairs with the grooves 31b on the outer joint member 31 formed on spherical outer peripheral face 32a thereof, and balls 33, as the rolling elements, interposed between the grooves 31b on the outer joint member 31 and the grooves 32b on the inner joint member 32, and interposes a cage 34 to hold the balls 33 between the outer joint member 31 and the inner joint member 32. It is noted that the number of the balls 33 is preferably any of 3, 4, 5, 6, 7, and 8. In addition, a boot is mounted to the constant velocity joint 30 (not shown in the figure) in order to prevent the grease sealed inside thereof from leaking to the outside and to prevent foreign matters from entering inside.

### [Fourth embodiment: sliding constant velocity joint]

The constant velocity joint according to the fourth embodiment of the present invention is a sliding constant velocity joint in which the grease composition for constant velocity joints according to the above first embodiment is sealed and the rolling elements are rollers.

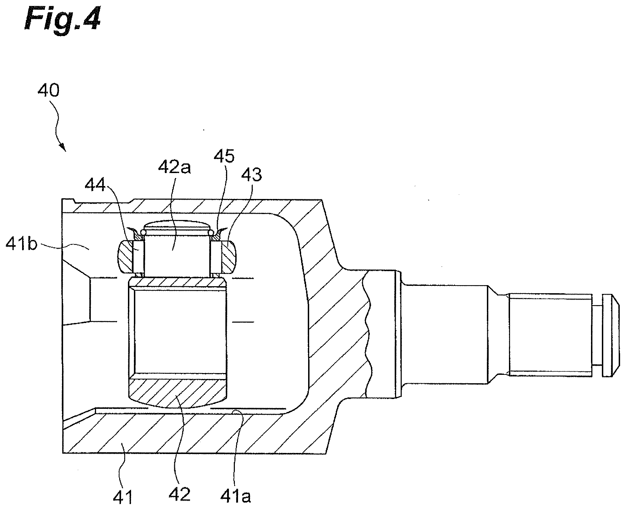

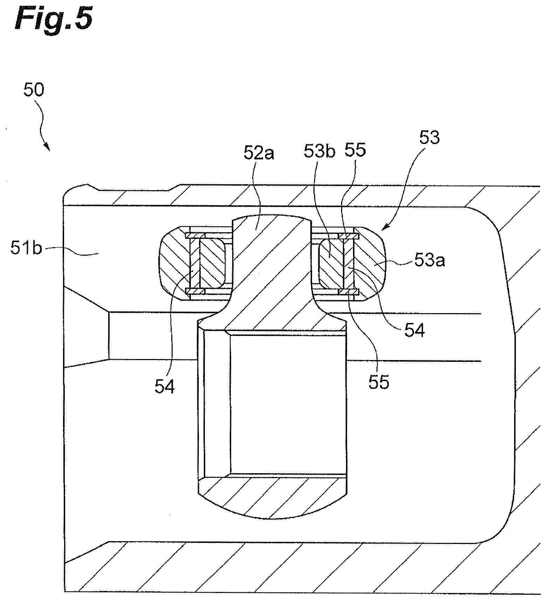

An example of the sliding constant velocity joint in which the rolling elements are rollers is one referred to as a tripod-type sliding constant velocity joint 40 as shown in Figure 4, of which structure comprises an outer joint member 41 with three linear grooves 41b extended in the axis direction formed on inner peripheral face 41a thereof, an inner joint member 42 being a tripod member having three journals 42a protruded in the radial direction, and rollers 43, as the rolling elements, rotatably supported by the journals 42a and rollably inserted into the grooves 41b on the outer joint member 41 to be guided along the grooves 41b. A plurality of needle-like rollers 44 are interposed between the journals 42a and the rollers 43 to make the rollers 43 rollable. It is noted that accessory parts to mount a plurality of needle-like rollers 44 and the roller 43 to the journal 42a such as a. retaining ring 45 may be suitably used. In addition, the tripod-type sliding constant velocity joints also include a double roller-type tripod-type sliding constant velocity joint 50 in which a roller 53 inserted into one groove 51b has a dual structure as shown in Figure 5 other than the single roller-type tripod-type sliding constant velocity joint 40 in which one roller 43 is inserted into one groove 41b as shown in Figure 4. In Figure 5, a roller 53 consists of an outer roller 53a and an inner roller 53b, a plurality of needle-like rollers 54 are interposed between the outer roller 53a and the inner roller 53b, and the inner roller 53b and a plurality of needle-like rollers 54 are held by retaining rings 55 mounted to the outer roller 53a (two places). It is noted that the double roller-type structure is not limited to the one described above, but may be one in which, for example, the inner roller 53b is mounted to the journal 52a with a plurality of needle-like rollers 54 interposed and the outer roller 53a is mounted to the outer face of the inner roller 53b.

In addition, a boot is mounted to each of the constant velocity joints 40 and 50 (not shown in the figure) in order to prevent the grease sealed inside thereof from leaking to the outside and to prevent foreign matters from entering inside.

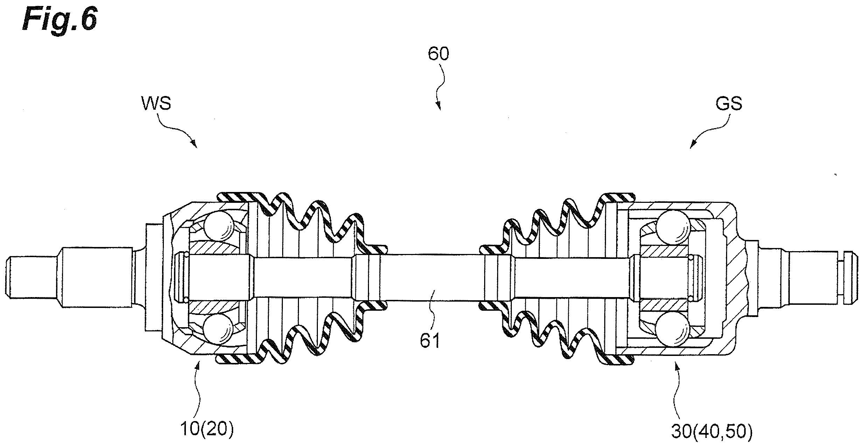

Any of the constant velocity joints 10, 20, 30, 40 and 50 can be applied to a drive shaft for an automobile. An example of the drive shaft for an automobile is shown in Figure 6. The drive shaft for an automobile 60 has a constitution in which the fixed constant velocity joint 10 or the fixed constant velocity joint 20 is installed in the driving wheel side WS and the sliding constant velocity joint 30, the sliding constant velocity joint 40 or the sliding constant velocity joint 50 is installed in the differential gear side GS, and these constant velocity joints are connected by a shaft 61.

### Examples

Hereinafter, the present invention will be more specifically illustrated based on Examples and Comparative Examples, but the present invention is in no way limited to the following Examples.

### [Examples 1-3, Comparative Examples 1-6]

Compositions and properties of the grease of Examples and Comparative Examples are shown in Table 1. In each of Examples 1-3 and Comparative Examples 1-5, diphenylmethane-4,4'-diisocyanate was reacted with cyclohexylamine and octadecyl alcohol in the lubricating base oil, the resulting urea/urethane-based compounds were homogeneously dispersed, other ingredients set forth in Table 1 were blended in the dispersed material, and the blended material was roll-milled to prepare grease.

In Comparative Example 6, grease composition was prepared by using Li soap as the thickener in place of the urea/urethane-based compound in Example 1 and so forth.

As the additives and the like set forth in Table 1, those described below were used.
(a) Lubricating base oil: a lubricating base oil obtained by mixing paraffinic mineral oil 1 (the kinematic viscosity at 100°C is 10.7 mm²/s, the density at 15°C is 0.8858 g/cm³), paraffinic mineral oil 2 (the kinematic viscosity at 100°C is 31.7 mm²/s, the density at 15°C is 0.9008 g/cm³), and naphthenic mineral oil (the kinematic viscosity at 100°C is 6.5 mm²/s, the density at 15°C is 0.9292 g/cm³) at a volume ratio of 45:45:10 was used.
(b-1) Urea/urethane-based thickener: a urea/urethane-based compound formed through the reaction of diphenylmethane-4,4'-diisocyanate with cyclohexylamine and octadecyl alcohol was used.
(b-2) Soap-based thickener: lithium 12-hydroxystearate was used.
(c-1) Molybdenum dithiocarbamate: a molybdenum dithiocarbamate of which molybdenum element content was 29% by mass and sulfur element content was 28% by mass based on the molybdenum dithiocarbamate was used.
(c-2) Molybdenum dithiophosphate: a molybdenum dithiophosphate of which molybdenum element content was 10% by mass, phosphorus element content was 6% by mass and sulfur element content was 12% by mass based on the molybdenum dithiophosphate was used.
(d) Zinc dithiophosphate: a zinc dithiophosphate which was represented by the formula (5) where the R⁶-R⁹ were alkyl groups having 3-8 carbon atoms with secondary structure, respectively, and of which zinc element content was 10% by mass, phosphorus element content was 9% by mass, and sulfur element content was 18% by mass based on the zinc dithiophosphate was used.
(e) Polysulfide: a polysulfide which was represented by the formula (6) and of which sulfur content was 42% by mass based on the polysulfide was used.
(f) Triglyceride: lard was used.

The properties of each Example or Comparative Example was evaluated as follows:
[Consistency] The consistency at 60 W was determined according to JIS. K 2220.
[Copper plate corrosion] The copper plate corrosion at 100°C after 24 hours was determined according to JIS K 2220.
[Oxidation stability] The sample pressurized at 755 kPa with oxygen from a cylinder was heated at 99°C and the pressure drop after 100 hour passage was determined according to JIS K 2220.
[Boot material immersion test] According to JIS K 6258, a chloroprene rubber material was immersed in the grease composition and kept at 100°C for 240 hours, then the rates of change of the volume, the tensile strength, and the elongation at break before and after the immersion were determined, and then, when the practical performance was satisfied, the grease composition was evaluated as A, and the insufficient characteristics were evaluated as B.

The practical performance of each Example and Comparative Example was evaluated as follows:
[Vibration characteristic] A tripod-type sliding constant velocity joint in which the grease composition was filled was used, operated under conditions of an operation angle of 0-15 degree, a rotational frequency of 150 rpm, and torque of 0-700 N·m, and the induced thrust was determined. When the practical performance was satisfied, the grease composition was evaluated as A, and the insufficient characteristic was evaluated as B.
[Durability] A Birfield-type fixed constant velocity joint and a tripod-type sliding constant velocity joint in both of which the grease composition was filled were used, operated under conditions of an operation angle of 5 degree, a rotational frequency of 200 rpm, and torque of 700 N·m, and the time until the continuous operation became impossible was determined. When the above time was practically sufficient, the grease composition was evaluated as A, and when the above time was practically insufficient, the grease composition was evaluated as B.

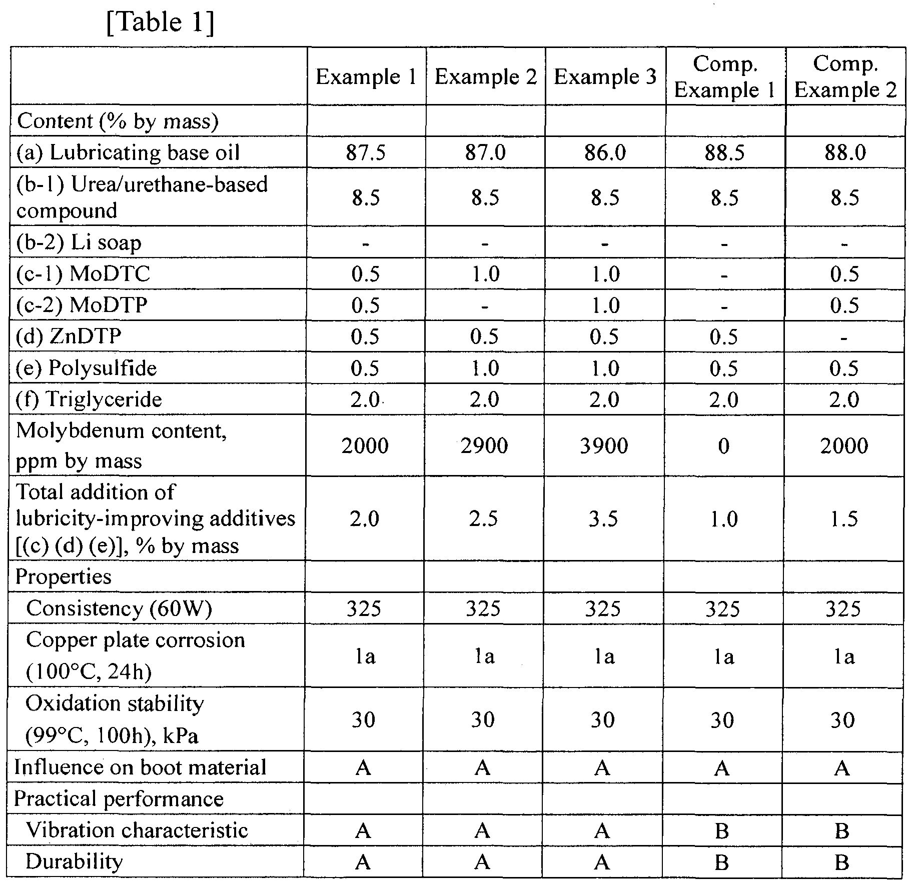

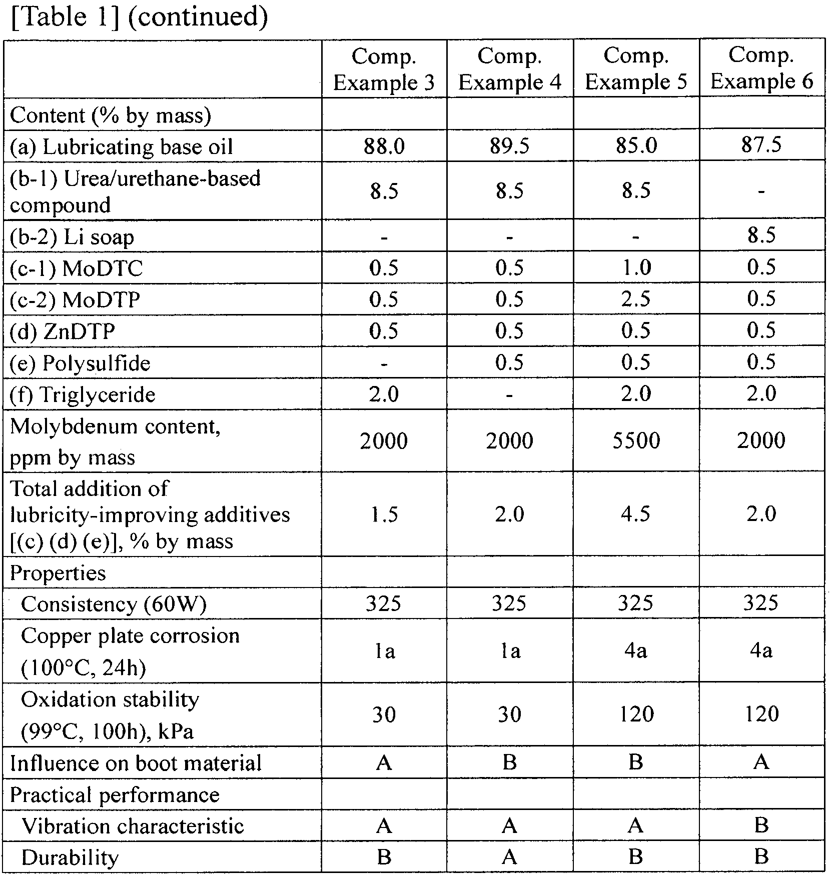

Each of Examples 1, 2, and 3 employs a combination of (c) an organomolybdenum, (d) a zinc dithiophosphate, (e) a polysulfide, and (f) a triglyceride, and even though the amount of the molybdenum due to the organomolybdenum providing the friction characteristic is in the range of 1000-5000 ppm based on the total amount of the grease composition and the content of the lubricity-improving additives, i.e., (c) the organomolybdenum, (d) the zinc dithiophosphate, and (e) the polysulfide is in the range of 1-4%, each of Examples 1, 2, and 3 is a grease composition which not only has excellent performance in the vibration and durability characteristics, which are practical performance of the constant velocity joint, but also is good in oxidation stability (the oxygen absorption pressure is low) and less affects the boot material.

On the other hand, Comparative Example 1 was obtained by removing the (c) organomolybdenum from Example 1, and inferior in the vibration characteristic and the durability as the practical performance. Comparative Example 2 was obtained by removing the (d) zinc dithiophosphate from Example 1, and inferior in the vibration characteristic and the durability as the practical performance. Comparative Example 3 was obtained by removing the (e) polysulfide from Example 1, and inferior in the durability. Comparative Example 4 was obtained by removing the (f) triglyceride from Example 1, and significantly affects the boot material.

Comparative Example 5 was obtained by increasing the amount of the (c-2) molybdenum dithiophosphate in Example 2 so as to make the amount of the molybdenum due to the organomolybdenum imparting the friction characteristic 5500 ppm based on the total amount of the grease composition, and causes deterioration in the oxidation stability and increase in the corrosiveness to copper, as well as deterioration in the durability. In addition, even when the triglyceride is used together, Comparative Example 5 significantly affects the boot material, thereby being not suitable for practical use. Comparative Example 6 is obtained by replacing the (a) thickener with the Li soap in Example 1, and causes deterioration in the vibration characteristic and the durability, thereby being not suitable for practical use.

### Industrial Applicability

The grease composition of the present invention can secure the vibration characteristic and the durability necessary for the constant velocity joint, and minimize the influence on the boot material. In addition, it is possible to suppress an addition of the organomolybdenum.

### Reference Signs List

10...Birfield-type fixed constant velocity joint, 11...outer joint member, 11a...inner peripheral face, 11b...groove, 12...inner joint member, 12a...outer peripheral face, 12b...groove, 13...ball, 14...cage, 20...undercut-free type fixed constant velocity joint, 30...double offset-type sliding constant velocity joint, 31...outer joint member, 31a...inner peripheral face, 31b...groove, 32...inner joint member, 32a...outer peripheral face, 32b...groove, 33...ball, 34...cage, 40...tripod-type sliding constant velocity joint, 41...outer joint member, 41a...inner peripheral face, 41b...groove, 42...inner joint member, 42a...journal, 43...roller, 44...needle-like roller, 45...retaining ring, 50...tripod-type sliding constant velocity joint, 51b...groove, 53...roller, 53a...outer roller, 53b...inner roller, 54...needle-like roller, 55...retaining ring, 60...drive shaft for automobile, 61...shaft

## Claims

1. A grease composition for constant velocity joints comprising:
a lubricating base oil;
at least one thickener selected from urea-based thickeners, urethane-based thickeners and urea/urethane-based thickeners;
an organomolybdenum;
a zinc dithiophosphate;
a polysulfide; and
a triglyceride,
wherein a content of the organomolybdenum is 1000-4000 ppm by mass in terms of molybdenum element, wherein a content of the zinc dithiophosphate is 0.2-2% by mass, wherein a content of the polysulfide is 0.1-2% by mass, wherein a content of the triglyceride is 0.2-10% by mass, based on a total amount of the grease composition, and
wherein a total content of the organomolybdenum, the zinc dithiophosphate and the polysulfide is 1-4% by mass based on the total amount of the grease composition.

2. The grease composition for constant velocity joints according to claim 1, wherein the triglyceride is a triester of glycerol and a fatty acid having 8-24 carbon atoms.

3. Use of the grease composition for constant velocity joints according to claim 1 or 2 for lubricating fixed or sliding constant velocity joints applied to drive shafts for automobiles.

4. A fixed constant velocity joint comprising:
the grease composition for constant velocity joints according to claim 1 or 2, the grease composition sealed in the fixed constant velocity joint; and
balls as rolling elements.

5. A sliding constant velocity joint comprising:
the grease composition for constant velocity joints according to claim 1 or 2, the grease composition sealed in the sliding constant velocity joint; and
balls as rolling elements.

6. A sliding constant velocity joint comprising:
the grease composition for constant velocity joints according to claim 1 or 2, the grease composition sealed in the sliding constant velocity joint; and
rollers as rolling elements.

## Patentansprüche

1. Fettzusammensetzung für Gleichlaufgelenke, umfassend:
ein Schmiergrundöl;
mindestens ein Verdickungsmittel, ausgewählt aus Verdickungsmitteln auf Harnstoffbasis, Verdickungsmitteln auf Urethanbasis und Verdickungsmitteln auf Harnstoff/Urethanbasis;
ein Organomolybdän;
ein Zinkdithiophosphat;
ein Polysulfid; und
ein Triglycerid,
wobei ein Gehalt des Organomolybdäns 1000-4000 ppm in Bezug auf das Molybdänelement beträgt, wobei ein Gehalt des Zinkdithiophosphats 0,2-2 Massen-% beträgt, wobei ein Gehalt des Polysulfids 0,1-2 Massen-% beträgt, wobei ein Gehalt des Triglycerids 0,2-10 Massen-%, bezogen auf eine Gesamtmenge der Fettzusammensetzung, beträgt, und
wobei ein Gesamtgehalt des Organomolybdäns, des Zinkdithiophosphats und des Polysulfids 1-4 Massen-%, bezogen auf die Gesamtmenge der Fettzusammensetzung, beträgt.

2. Die Fettzusammensetzung für Gleichlaufgelenke nach Anspruch 1, worin das Triglycerid ein Triester von Glycerin und einer Fettsäure mit 8-24 Kohlenstoffatomen ist.

3. Verwendung der Fettzusammensetzung für Gleichlaufgelenke nach Anspruch 1 oder 2 zum Schmieren von festen oder gleitenden Gleichlaufgelenken, die auf Antriebswellen für Automobile aufgebracht sind.

4. Fixiertes Gleichlaufgelenk, umfassend:
die Fettzusammensetzung für Gleichlaufgelenke nach Anspruch 1 oder 2, die Fettzusammensetzung, die in dem fixierten Gleichlaufgelenk abgedichtet ist; und
Kugeln als Rollkörper.

5. Gleitendes Gleichlaufgelenk, umfassend:
die Fettzusammensetzung für Gleichlaufgelenke nach Anspruch 1 oder 2, die Fettzusammensetzung, die in dem gleitenden Gleichlaufgelenk abgedichtet ist; und
Kugeln als Rollkörper.

6. Gleitendes Gleichlaufgelenk, umfassend:
die Fettzusammensetzung für Gleichlaufgelenke nach Anspruch 1 oder 2, die Fettzusammensetzung, die in dem gleitenden Gleichlaufgelenk abgedichtet ist; und
Rollen als Rollkörper.

## Revendications

1. Composition de graisse pour joints homocinétiques comprenant :
une huile de base lubrifiante ;
au moins un épaississant choisi parmi des épaississants à base d'urée, des épaississants à base d'uréthane et des épaississants à base d'urée/d'uréthane ;
un organomolybdène ;
un dithiophosphate de zinc ;
un polysulfure ; et
un triglycéride,
dans laquelle une teneur de l'organomolybdène va de 1000 à 4000 ppm en masse en termes d'élément molybdène, dans laquelle une teneur du dithiophosphate de zinc va de 0,2 à 2 % en masse, dans laquelle une teneur du polysulfure va de 0,1 à 2 % en masse, dans laquelle une teneur du triglycéride va de 0,2 à 10 % en masse, sur la base d'une quantité totale de la composition de graisse, et
dans laquelle une teneur de l'organomolybdène, du dithiophosphate de zinc et du polysulfure va de 1 à 4 % en masse sur la base de la quantité totale de la composition de graisse.

2. Composition de graisse pour joints homocinétiques selon la revendication 1, dans laquelle le triglycéride est un triester de glycérol et d'un acide gras ayant de 8 à 24 atomes de carbone.

3. Utilisation de la composition de graisse pour joints homocinétiques selon la revendication 1 ou 2 pour lubrifier des joints homocinétiques fixes ou coulissants employés dans des arbres de transmission pour automobiles.

4. Joint homocinétique fixe comprenant :
la composition de graisse pour joints homocinétiques selon la revendication 1 ou 2, la composition de graisse étant enfermée hermétiquement dans le joint homocinétique fixe ; et
des billes en tant qu'éléments de roulement.

5. Joint homocinétique coulissant comprenant :
la composition de graisse pour joints homocinétiques selon la revendication 1 ou 2, la composition de graisse étant enfermée hermétiquement dans le joint homocinétique coulissant ; et
des billes en tant qu'éléments de roulement.

6. Joint homocinétique coulissant comprenant :
la composition de graisse pour joints homocinétiques selon la revendication 1 ou 2, la composition de graisse étant enfermée hermétiquement dans le joint homocinétique coulissant ; et
des rouleaux en tant qu'éléments de roulement.
